# EUROPÄISCHE PATENTSCHRIFT

(11) **EP 3 077 634 B1**
(45) Veröffentlichungstag und Bekanntmachung des Hinweises auf die Patenterteilung: **21.08.2019**
(21) Anmeldenummer: 14780483.5
(22) Anmeldetag: 02.10.2014
(51) Int. Cl.: F01N 3/20

(54) **DOSIERMODUL ZUR ADBLUE-DOSIERUNG**
METERING MODULE FOR METERING ADBLUE
MODULE DE DOSAGE D'ADBLUE

(30) Priorität: 03.12.2013 DE 102013224739
(43) Veröffentlichungstag der Anmeldung: 12.10.2016
(73) Patentinhaber: Robert Bosch GmbH, 70442 Stuttgart (DE)
(72) Erfinder: MURST, Martin, 74321 Bietigheim-Bissingen (DE); KNITTEL, Achim, 71254 Ditzingen (DE); ELSOE, Gellert, 70437 Stuttgart (DE); KREHER, Thilo, 70825 Korntal-Muenchingen (DE); RANKEL, Thorsten, 71229 Leonberg (DE); WINKLER, Jochen, 73730 Esslingen (DE); HENKEL, Claudius, 74321 Bietigheim-Bissingen (DE)
(86) Internationale Anmeldenummer: PCT/EP2014/071143
(87) Internationale Veröffentlichungsnummer: WO 2015/082094

(56) Entgegenhaltungen:
- WO-A1-2012/049175
- DE-A1-102009 047 375
- DE-A1-102009 047 375
- DE-A1-102011 077 955
- DE-A1-102011 077 955
- DE-A1-102011 086 795
- DE-A1-102011 086 798
- DE-A1-102012 217 703

## Beschreibung

Die Erfindung betrifft eine Dosiervorrichtung, umfassend ein Einspritzventil und eine Aufnahmevorrichtung, welche zu einer baulichen Einheit mittels stoffschlüssiger Verbindungen zusammengefasst sind.

### Stand der Technik

Bei bekannten Dosiervorrichtungen für flüssige Reduktionsmittel, wie zum Beispiel aus DE 10 2008 041 486 bekannt, wird ein Dosiermodul verwendet, welches eine Dosiereinheit, beispielsweise ein Dosierventil, zum Einspritzen eines Reduktionsmittels in den Abgasbereich enthält und von einer Haltevorrichtung oder einem Adapter aufgenommen wird, mittels derer eine Anbindung an den Abgasstrang erfolgt. Um das Reduktionsmittel optimal in das Abgas einbringen zu können, muss das Dosiermodul möglichst nahe an dem heißen Abgasstrang positioniert werden, wobei im Abgasstrang von Verbrennungskraftmaschinen Maximaltemperaturen von 700°C erreicht werden. Aufgrund dieses zwangsläufig hohen Wärmeeintrags in das Dosiermodul besteht die Gefahr der Überhitzung der Materialien, beispielsweise derjenigen für Isolierungen und Dichtungen, was die Funktionstüchtigkeit der Dosiereinheit nachhaltig beeinträchtigt. Aus Gründen der Bauteilfestigkeit und dem Materialschutz vor Überhitzung sind Kühleinrichtungen bekannt, welche eine nicht zu überschreitende Grenztemperatur des Dosiermoduls von etwa 150°C gewährleisten sollten.

Aus DE 10 2009 047 375 A1 geht ein Dosiermodul zum Dosieren eines Reduktionsmittels in den Abgasstrang einer Verbrennungskraftmaschine hervor, welches einer Kühleinrichtung zugeordnet ist. Neben einer passiven Kühlung durch Kühlrippen am Dosiermodul wird ein mit einem Fluid gefüllter Kühlkörper eingesetzt. Beispielsweise umfasst ein Kühlgehäuse eine Metallhülse und Kunststoffteile, wobei es mehrteilig ausgebildet sein kann und mittels O-Ringen abgedichtet wird, und auf einer Aufnahmehülse des Dosiermoduls montiert ist.

Aus WO 2012/049175 ist eine Halterung für einen Injektor bekannt, beispielsweise zum Einbringen eines flüssigen Stoffes in ein Abgas einer Verbrennungskraftmaschine, wobei der Injektor in einem Grundkörper und einer Kappe vollständig aufgenommen ist. Der Grundkörper wird aus miteinander verbundenen Blechen gebildet, beispielsweise durch eine Löt- oder Schweißverbindung, die zusammen eine Ringkammer bilden, wobei der darin aufgenommene Injektor von dieser radial umschlossen wird und so eine Hitzebarriere darstellt. Die Ringkammer, welche teilweise von dem Gehäuse des Injektors begrenzt ist, wird mit einem Kühlmedium beaufschlagt. Grundkörper und Injektorgehäuse sind in den Anlagebereichen miteinander verklebt oder formschlüssig mittels Bördeln verbunden. Die Dichtigkeit des Systems wird durch mindestens eine die Klebeverbindungen ergänzende Dichtung erreicht. Die Verwendung von Elastomeren zur Abdichtung, Lagerung und/oder Isolation begrenzt die maximal zulässige Temperatur der Dosiermodule. Ferner ist der Schutz des in einem Dosiermodul eingebauten Dosierventils gegenüber der Umgebung, sei es Spritzwasser oder auf der Abgasseite gegenüber dem Reduktionsmittel nur beschränkt gewährleistet.

DE 10 2011 077 955 A1 bezieht sich auf ein kühlbares Dosiermodul. Dieses umfasst eine innere Hülse, die zur Aufnahme eines sich im Wesentlichen in einer Längsrichtung erstreckenden Injektors derart ausgebildet ist, dass die innere Hülse wenigstens über einem Teilbereich der Längserstreckung des Injektors um dessen Umfang angeordnet ist und eine äußere Hülse, welche die innere Hülse derart umgibt, so dass zwischen der inneren Hülse und der äußeren Hülse ein Volumen zur Aufnahme eines fluiden Kühlmittels ausgebildet ist.

DE 10 2011 086 795 A1 bezieht sich auf eine Vorrichtung zur Kühlung eines Dosierventils. Dieses weist eine Kühleinrichtung auf, die von einem Kühlfluid durchströmt ist. Die Kühlvorrichtung umfasst eine erste Kammer, die ein Kühlfluideintritt aufweist. Das Dosierventil weist einen zusätzlichen Kühlkörper auf, der eine zweite Kammer enthält. Diese ist über mindestens eine Öffnung hydraulisch mit der ersten Kammer verbunden.

DE 10 2011 086 798 A1 bezieht sich auf ein Dosiermodul mit Luftspaltisolierung. Im Dosiermodul ist eine Kühleinrichtung zugeordnet, die einen Kühlkörper umfasst, der von einer Kühlflüssigkeit durchströmt ist. Der Kühlkörper stellt eine Einhausung des Dosiermoduls dar. Eine erste Gruppe von Teilen bildet eine Luftspaltisolierung an einem elektrischen Kontakt, während eine zweite Gruppe von Teilen von Kühlfluid durchströmt ist.

DE 10 2012 217 703 A1 hat ein temperaturrobustes Dosiermodul zum Gegenstand. Das Dosiermodul umfasst ein Gehäuse, welches mehrere Gehäuseabschnitte umfasst. Ein erster Gehäuseabschnitt, an welchem ein Zulauf für den Betriebs-/Hilfsstoff ausgeführt ist, befindet sich in einem temperaturexponierten Bereich des Dosiermodules und ist aus einem metallischen Material gefertigt.

### Offenbarung der Erfindung

Erfindungsgemäß wird eine Dosiervorrichtung nach Anspruch 1 zum Einbringen eines Betriebs- oder Hilfsstoffes in ein Strömungsrohr einer Verbrennungskraftmaschine vorgeschlagen, umfassend ein Einspritzventil und eine Aufnahmevorrichtung, welche ein Kühlkörperelement und ein Deckelelement umfasst, wobei das Einspritzventil und die Aufnahmevorrichtung mittels stoffschlüssiger Verbindungen zu einer baulichen Einheit zusammengefasst sind. Eine derartige Dosiervorrichtung kann insbesondere im Rahmen eines Abgasnachbehandlungssystems zur Entstickung der Abgase von Verbrennungskraftmaschinen eingesetzt werden, wobei ein Reduktionsmittel, beispielsweise wässrige Harnstofflösung (AdBlue®) in das Abgasrohr einer Verbrennungskraftmaschine eingespritzt wird.

Die Dosiervorrichtung umfasst unter anderem ein Dosiermodul, das eine in einer Aufnahmevorrichtung angeordnete, als Einspritzventil ausgeführte Dosiereinheit aufweist. Ein Einspritzventil wird auch als Dosierventil oder Injektor bezeichnet. Die Aufnahmevorrichtung umschließt das Einspritzventil zumindest teilweise, bevorzugt weitgehend vollständig. Die Aufnahmevorrichtung kann einen Anschlussbereich aufweisen, um die Dosiervorrichtung mit dem Abgasrohr zu verbinden.

Die Aufnahmevorrichtung ist als mehrteilige Konstruktion ausgeführt, mindestens ein Kühlkörperelement und ein Deckelelement umfassend und ausgebildet, um das Einspritzventil aufzunehmen. Das Einspritzventil ist an seinem unteren, dem Abgasrohr zugewandten Ende, an dem eine Spritzlochscheibe positioniert ist, mittels Schweißverbindung mit der Aufnahmevorrichtung, bzw. mit dem Kühlkörperelement der Aufnahmevorrichtung stoffschlüssig verbunden. Diese Schweißverbindung dichtet gegenüber dem Abgas ab und gewährleistet einen geringen Wärmewiderstand zwischen dem Kühlkörperelement und der an dem unteren Ende des Einspritzventils aufgenommenen Spritzlochscheibe.

Das Einspritzventil, welches in der Aufnahmevorrichtung aufgenommen ist, wird gegenüber der Umgebung auch über das Deckelelement abgedichtet, welches ein Element der Aufnahmevorrichtung ist. Das Einspritzventil ist mittels einer Schweißverbindung mit dem Deckelelement in einem Anlagebereich verbunden und das Deckelelement ist wiederum bevorzugt mittels einer stoffschlüssigen Verbindung, insbesondere einer Schweißnaht mit dem Kühlkörperelement verbunden. Die stoffschlüssigen Verbindungen der einzelnen Komponenten mittels Schweißung bieten unter anderem den Vorteil einer weitgehend vollständigen Abdichtung des Einspritzventils, ohne dass weitere Dichtelemente und damit hinsichtlich einer Temperaturstabilität ungünstige Materialien eingesetzt werden.

Kühlkörperelement und Deckelelement sind bevorzugt aus dünnwandigen Bauteilen gefertigt, insbesondere Blechen, welche miteinander bevorzugt stoffschlüssig verbunden sind. Das Kühlkörperelement kann ebenfalls eine mehrteilige Konstruktion sein, umfassend mehrere miteinander verbundene Elemente, wobei eine stoffschlüssige Verbindung in Anlagebereichen der einzelnen Elemente bevorzugt ist.

Das Kühlkörperelement hat eine komplex geformte Struktur, welche unter anderem einen Hohlraum ausbildet, der mit einem Kühlmedium beaufschlagbar ist. Ein derart gebildeter Hohlraum stellt eine Ringkammer bereit, wobei ein Kühlmediumzulauf und -ablauf an dem Kühlkörperelement vorgesehen ist, um die Ringkammer mit Kühlmedium zu beaufschlagen. Der Hohlraum umschließt das aufgenommene Einspritzventil zumindest teilweise, bevorzugt weitgehend vollständig und stellt ein großes Aufnahmevolumen für das Kühlmedium bereit. Ferner kann die Ringkammer des Kühlkörperelements derart mittels Trennelementen unterteilt sein, dass das Kühlmedium innerhalb der Ringkammer entlang eines Strömungswegs geführt wird, welcher zu einer optimierten Kühlung des Einspritzventils ausgelegt ist. Das eintretende Kühlmedium mit niedriger Temperatur gelangt entlang des Strömungswegs beispielsweise in den Bereich des Einspritzventils, in dem höhere Temperaturen vorliegen. Aufgrund der Temperaturverhältnisse wird eine verbesserte Kühlwirkung für das Einspritzventil erreicht. Je nach Anwendungsfall und bereitzustellender Kühlleistung, können dem eintretenden Kühlmedium auch andere Strömungswege im Bereich des Einspritzventiles aufgeprägt werden. Ferner wird durch den vorgegebenen Strömungsweg die Strömung des Kühlmediums derart beeinflusst, dass eine überwiegend turbulente Strömung vorliegt und Toträume weitgehend vermieden werden, wobei die Wärmeabfuhr verbessert wird. Das Kühlmedium kann eine Flüssigkeit oder ein Gasgemisch sein, beispielsweise Kühlwasser, Wasser, Kraftstoff oder Reduktionsmittel oder Luft.

Des Weiteren ist die Aufnahmevorrichtung derart gestaltet, dass das Einspritzventil von dem Kühlkörperelement hülsenförmig umschlossen ist, wobei ein zwischen dem Einspritzventil und dem Kühlkörperelement sich ausbildender radialer Hülsenraum sich insbesondere bis in den Bereich der Spitze des Einspritzventils erstreckt. Der Hülsenraum, welcher gegenüber der Umgebung abgedichtet ist, kann ein Medium aufnehmen, beispielsweise Luft, Wärmeleitpaste, Öl oder andere geeignete Medien, welche eine Wärmeübertragung zwischen Einspritzventil und Kühlkörperelement unterstützen.

Zur radialen Halterung des Einspritzventils in der Aufnahmevorrichtung ist ferner vorgesehen, dass in dem radialen Hülsenraum, gebildet zwischen Einspritzventil und Kühlkörperelement, ein Halteelement angeordnet ist, welches das Einspritzventil radial positioniert. Das Halteelement kann in Form eines ringförmigen Wärmeleitkörpers gestaltet sein, so dass ein von der Spitze in das Einspritzventil eintretender Wärmestrom durch thermischen Kontakt an das Halteelement und weiter an das Kühlkörperelement abgegeben wird. Somit werden durch das Halteelement eine einfache Befestigung des Einspritzventils an der Aufnahmevorrichtung und eine effektive Wärmeableitung in das Kühlkörperelement der Aufnahmevorrichtung erreicht.

Einspritzventil und Aufnahmevorrichtung unterliegen bei Temperaturänderungen unterschiedlichen Längendehnungen, welche zu mechanischen Spannungen insbesondere an den Verbindungsstellen führen. Zur elastischen Kompensation unterschiedlicher thermischer Längenänderungen des Einspritzventils einerseits und der Aufnahmevorrichtung andererseits wird erfindungsgemäß mindestens ein Dehnungskompensationsmittel vorgesehen. Das mindestens eine Dehnungskompensationselement kompensiert vorzugsweise die gesamten sich ergebenden Längendifferenzen der miteinander verbundenen Das Dehnungskompensationsmittel ist als Federelement oder als Wellenbalg ausgebildet und zwischen Einspritzventil und Aufnahmevorrichtung angeordnet.

Eine Weiterbildung der Dosiervorrichtung sieht vor, dass ein elektrischer Anschluss und eine Ansteuerung des Einspritzventils zur Steuerung der Dosierung von Reduktionsmittel vorgesehen sind, wobei das Deckelement eine entsprechende Durchführung umfasst, welche über eine Abdichtung gegenüber der Umgebung verfügt. Beispielsweise kann eine Befestigung mittels einer formschlüssigen Verbindung durch Bördeln realisiert werden.

### Vorteile der Erfindung

Mit der erfindungsgemäß vorgeschlagenen Lösung der Dosiervorrichtung mit einem Einspritzventil und einer damit zu einer baulichen Einheit verbundenen Aufnahmevorrichtung mittels stoffschlüssiger Verbindungen wird ein optimaler Schutz gegenüber äußeren Medien, beispielsweise Spritzwasser erreicht. Einfache konstruktive Maßnahmen und ein reduzierter Fertigungsaufwand der Aufnahmevorrichtung, umfassend ein Kühlkörperelement und ein Deckelelement, reduzieren die Fertigungskosten und das Gewicht der Konstruktion.

Für das Einspritzventil, welches optimiert gekühlt wird, ergibt sich eine erhöhte Robustheit gegenüber Temperaturbelastungen. Insbesondere da das Reduktionsmittel, welches von dem Einspritzventil in das Abgasrohr eingebracht wird, bei einer Temperatur größer als 140°C bis 160°C in die Dampfphase übergeht, kann mit einer verbesserten Wärmeabfuhr ein Sieden innerhalb des Einspritzventils vermieden werden. Durch die verbesserte Kühlung des Einspritzventils, kombiniert mit einer Isolierung gegenüber der Umgebung, kann die Anordnung der Dosiervorrichtung für ein Reduktionsmittel optimiert werden.

Die Verbindung des Einspritzventils mit der Aufnahmevorrichtung über stoffschlüssige Schweißverbindungen bietet eine optimale Abdichtung ohne die Verwendung von zusätzlichen Dichtungen, welche hinsichtlich ihrer Temperaturstabilität problematisch sind. Als weitere Vorteile sind zu nennen, dass die Aufnahmevorrichtung, bzw. das Kühlkörperelement und das Deckelelement aus dünnen Blechen gefertigt werden können, wodurch eine Gewichtsersparnis und eine einfache Fertigung möglich ist. Ferner kann das Kühlkörperelement durch Trennelemente optimal für die Durchströmung eines Kühlmediums gestaltet werden.

Ferner kann auf einfache Weise die Lagerung des Einspritzventils und die Kompensation von durch Temperaturänderungen induzierten Dehnungen in der erfindungsgemäßen Dosiervorrichtung ermöglicht werden. Das Einspritzventil ist der erfindungsgemäß vorgeschlagenen Lösung folgend, nahezu vollständig vom Kühlmedium umgeben. Der das Einspritzventil als thermische Barriere umgebende Mantel aus Kühlmedium, ist in radiale Richtung nahezu vollständig. Mit der erfindungsgemäß vorgeschlagenen Lösung kann des Weiteren erreicht werden, dass das Einspritzventil in optimaler Weise abhängig von seinem Einbauort und seinen Betriebsbedingungen eingebaut werden kann. Abhängig davon, ob das Einspritzventil an einem hohen Temperaturen ausgesetzten Einbauort eingesetzt wird oder an einer hinsichtlich der Akustik empfindlichen Stelle, kann eine dementsprechende Anbindung des Einspritzventiles in optimaler Weise in einer Aufnahmevorrichtung für das Einspritzventil erfolgen. Hinsichtlich eines temperaturbeständigen Einbauortes, kann durch die Wahl geeigneter Materialien sowie eines geeigneten Temperaturniveaus des Kühlmediums für eine verbesserte Wärmeabfuhr Sorge getragen werden. Wird hingegen das Einspritzventil in einer akustisch empfindlichen Stelle eingesetzt, so kann eine Schallausbreitung durch entsprechend optimierten Einbau ohne Schallübertragungsbrücken zu schaffen, in der Aufnahmeeinrichtung des Einspritzventiles erfolgen.

### Kurze Beschreibung der Zeichnungen

Weitere Vorteile und Ausführungsformen der erfindungsgemäßen Gegenstände werden durch die Zeichnungen veranschaulicht und in der nachfolgenden Beschreibung näher erläutert.

Es zeigen:
- Figur 1: einen Querschnitt durch eine Dosiervorrichtung mit einer Halterung und einem integrierten Einspritzventil und
- Figur 2: einen Querschnitt durch eine Ausführungsvariante einer erfindungsgemäß vorgeschlagenen Dosiervorrichtung.

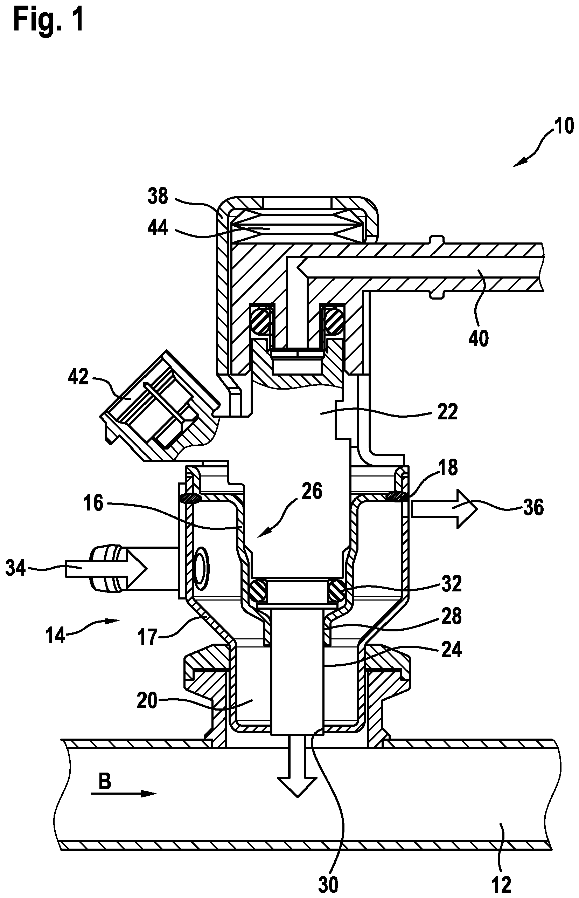

Figur 1 zeigt eine Dosiervorrichtung 10, zum Einsatz in SCR-Systemen zum Dosieren von Reduktionsmittel in ein Abgasrohr 12, wobei das Abgasrohr 12 von einem Abgasstrom in Strömungsrichtung B durchströmt ist. Der Abgasstrom stammt aus einer in Figur 1 nicht dargestellten Verbrennungskraftmaschine, an die auslassseitig das Abgasrohr 12 angeschlossen ist. Die Dosiervorrichtung 10 umfasst einen Grundkörper 14, welcher aus einem ersten Blech 16 und einem zweiten Blech 17 gebildet wird, welche miteinander in einem Anlagebereich bzw. einem Überlappungsbereich über eine Lotverbindung 18 verbunden sind. Die Bleche 16 und 17 sind voneinander beabstandet und bilden eine Ringkammer 20. Ferner ist in dem Grundkörper 14 ein Einspritzventil 22 aufgenommen, dessen Gehäuse mit 24 bezeichnet wird. Die Kontur des ersten Blechs 16 ist dabei so gewählt, dass eine passende Aufnahme 26 für das Einspritzventil 22 gebildet wird. Das Einspritzventil 22 bildet mit dem ersten Blech 16 und dem zweiten Blech 17 Anlagebereiche aus, welche als Klebverbindungen 28 und 30 ausgeführt ist, wobei die Ringkammer 20 einerseits durch das erste und das zweite Blech 16, 17 und andererseits durch das Gehäuse 24 des Einspritzventils 22 begrenzt wird. Aus Dichtigkeitsgründen für die Ringkammer 20 ist des Weiteren, benachbart zu der Klebeverbindung 28, eine zusätzliche Dichtung 32 vorgesehen, beispielsweise in Form eines O-Ringes. An dem zweiten Blech 17 sind ein Kühlmediumzulauf 34 und ein Kühlmediumablauf 36 vorgesehen, durch welche eine Beaufschlagung der Ringkammer 20 mit einem Kühlmedium realisiert wird. Oberhalb des Grundkörpers 14 ist eine Kappe 38 vorgesehen, an welcher ein Injektionsfluidanschluss 40 vorgesehen ist. Die Kappe 38 und der Grundkörper 14 sind mittels einer nicht explizit dargestellten Lötverbindung miteinander verbunden. Zwischen dem Grundkörper 14 und der Kappe 38 ist ein elektrischer Anschluss 42 des Einspritzventils 22 dargestellt, wobei auch Steuerleitungen dort angeschlossen werden können. Zur Kompensation einer durch Eisbildung eintretenden Volumenänderung eines innerhalb der Dosiereinrichtung 10 befindlichen Injektionsfluids, ist eine Tellerfeder als Dehnungskompensationsmittel 44 im Bereich der Kappe 38 vorgesehen.

### Ausführungsvarianten:

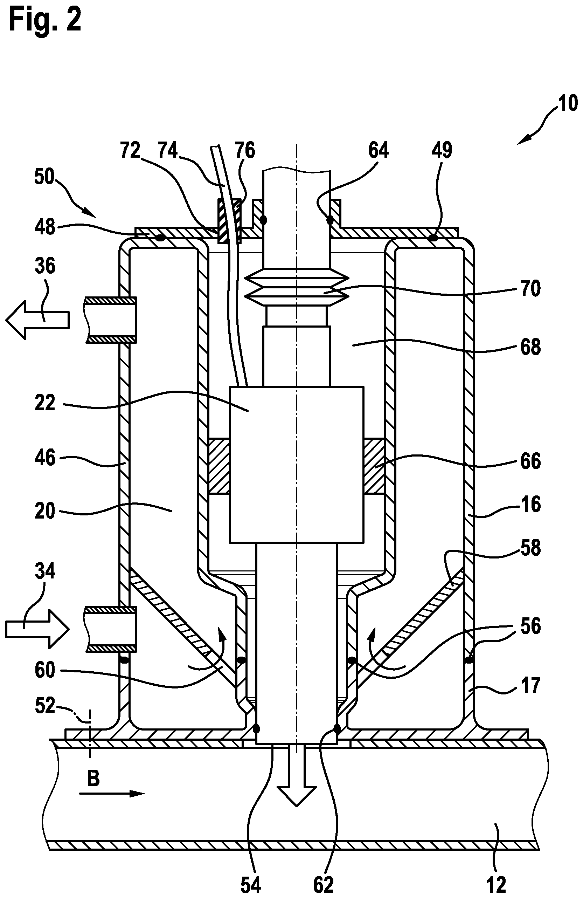

Figur 2 zeigt eine mögliche Ausführungsvariante der erfindungsgemäß vorgeschlagenen Dosiervorrichtung 10, wobei vergleichbare Elemente entsprechend der in Figur 1 gewählten Bezeichnungen gekennzeichnet sind.

In der Dosiervorrichtung 10 sind ein Kühlkörperelement 46 und ein Deckelelement 48 zu einer Aufnahmevorrichtung 50 zusammengefasst, welche beispielsweise durch eine Schweißnaht 49 miteinander dichtend verbunden sind. Die Dosiervorrichtung 10 ist an dem Abgasrohr 12 angeordnet, wobei beispielsweise eine Flanschverbindung 52 angebracht ist, mittels der die Dosiervorrichtung 10 mit dem Abgasrohr 12 verbindbar ist. Alternativ kann diese Verbindung auch durch eine Schweißverbindung oder durch Bördeln hergestellt werden. Die Dosiervorrichtung 10 umfasst das Einspritzventil 22 oder einen Injektor, über welche das Reduktionsmittel, beispielsweise AdBlue®, in den Abgasstrom eingebracht wird. Die Temperatur des in Strömungsrichtung B strömenden Abgases kann an dieser Stelle 700°C erreichen. Dementsprechend ist das Abgasrohr 12 an dieser Stelle aufgeheizt, wodurch das Einspritzventil 22 und insbesondere sein unteres Ende, an dem sich eine Spritzlochscheibe 54 befindet, extrem hohen thermischen Belastungen ausgesetzt. Demnach ist eine Kühlung des Einspritzventils 22 notwendig, welche eine Beschädigung der Dosiervorrichtung 10 verhindert.

Eine Kühlung wird erfindungsgemäß durch ein Kühlkörperelement 46 erreicht, als eine dünnwandige Konstruktion ausgebildet ist. Das Kühlkörperelement 46 kann aus mehreren Blechen gefertigt sein, welche eine mehr oder weniger komplexe Struktur aufweisen und an entsprechenden Anlagebereichen miteinander verschweißt sein. In der Ausführungsvariante gemäß Figur 2 sind die Bleche 16, 17 in einer Struktur ausgebildet und miteinander an Schweißverbindungen 56 stoffschlüssig verbunden.

Die derart miteinander verbundenen Bleche 16, 17, begrenzen die Ringkammer 20, welche über den Kühlmediumzulauf bzw. - ablauf 34, 36 mit einem Kühlmedium beaufschlagt werden kann. Als Kühlmedium kann eine Flüssigkeit, beispielsweise Wasser, Kühlwasser, Kraftstoff oder das Reduktionsmittel eingesetzt werden. In Figur 2 sind ferner Trennelemente 58 dargestellt, welche die Ringkammer 20 weiter unterteilen, wobei die dabei gebildeten einzelnen Bereiche der Ringkammer 20 über an den Trennelementen 58 vorgesehene Öffnungen 60 miteinander in fluidischen Kontakt stehen. Auf diese Weise wird dem Kühlmedium ein Strömungsweg vorgegeben, welcher eine optimierte Kühlung ermöglicht.

Das Einspritzventil 22 ist in der Aufnahmevorrichtung 50 aufgenommen, wobei das Kühlkörperelement 46 das Einspritzventil 22 weitgehend vollständig umschließt. Das Einspritzventil 22 ist an seinem unteren Ende im Bereich der Spritzlochscheibe 54 mittels einer als Schweißnaht 62 ausgeführten stoffschlüssigen Verbindung mit der Aufnahmevorrichtung 50, d.h. mit dem Kühlkörperelement 46 dichtend verbunden. Ferner ist das Einspritzventil 22 an seinem oberen Ende mit dem Deckelelement 48 der Aufnahmevorrichtung 50 in einem Anlagebereich ebenfalls mittels einer Schweißverbindung 64 stoffschlüssig verbunden. Somit ist das Einspritzventil 22 in der Aufnahmevorrichtung 50 aufgenommen, wobei dieses gegenüber der Umgebung über Schweißverbindungen abgedichtet ist, ohne dass zusätzliche Dichtelemente notwendig sind.

Zur radialen Positionierung des Einspritzventils 22 in der Aufnahmevorrichtung 50 ist ferner ein Halteelement 66 vorgesehen, welches in einem zwischen dem Einspritzventil 22 und dem Kühlkörperelement 46 ausgebildeten radialen Hülsenraum 68 vorgesehen ist. Das Halteelement 66 kann als ein ringförmiger Wärmeleitkörper gestaltet und in der Aufnahmevorrichtung 50, bzw. im radialen Hülsenraum 68 mit Presssitz gehalten sein. Auf diese Weise ist auch das Einspritzventil 22 zumindest mittelbar in der Aufnahmevorrichtung 50 gehalten und eine Wärmeableitung dargestellt. Der Hülsenraum 68, welcher mittels der Schweißverbindungen, ausgebildet als Schweißnaht 62 und 64 abgedichtet ist, kann mit einem Medium befüllt sein, welches der verbesserten Ableitung der in das Einspritzventil 22 vom unteren Ende eingetragenen Wärme dient. Geeignete Medien sind Luft, Wärmeleitpaste, Öl etc., wobei das wärmeleitende Medium das Einspritzventil 22 für eine effizientere Kühlung aufgrund eines besseren Wärmeübertrags weitgehend bis in den Bereich der Spritzlochscheibe 54 umgibt.

Das Einspritzventil 22 und die Aufnahmevorrichtung 50 zeigen bei Temperaturänderung unterschiedliche Volumen- bzw. Längenänderungen. Um eine Kompensation der unterschiedlichen thermischen Längenänderungen zu erreichen, ist zwischen Aufnahmevorrichtung 50, insbesondere zwischen dem Deckelement 48 und dem Einspritzventil 22 ein Dehnungskompensationselement 70 aufgenommen. Das Dehnungskompensationselement 70 kann in Form einer Tellerfeder, oder wie in Figur 2 angedeutet, als Faltenbalg gestaltet sein, wobei eine Relativbewegung zur Druckentlastung möglich ist.

An dem Deckelelement 48 ist ferner eine Durchführung 72 einer elektrischen Ansteuerung, angedeutet durch einen elektrischen Anschluss 74 des Einspritzventils 22 vorgesehen, wobei die Durchführung 72 über eine Abdichtung 76 verfügt.

Ein wesentlicher Vorteil dieser Ausführungsform besteht darin, dass durch die stoffschlüssigen Verbindungen der einzelnen Komponenten der Dosiervorrichtung 10 keine zusätzlichen Dichtelemente vorgesehen werden müssen. Ferner ergibt sich durch die leichtgewichtige Konstruktion der Aufnahmevorrichtung 50 in vorteilhafter Weise, dass eine kostengünstige Konstruktion möglich ist, welche hinsichtlich einer Kühlung des darin aufgenommenen Einspritzventils 22 optimiert ist.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereiches eine Vielzahl von Abwandlungen möglich, die im Rahmen fachmännischen Handelns liegen.

## Patentansprüche

1. Dosiervorrichtung (10) zum Einbringen eines Betriebs- oder Hilfsstoffes in ein Strömungsrohr einer Verbrennungskraftmaschine, insbesondere zum Einbringen eines Reduktionsmittels in ein Abgasrohr (12), umfassend ein Einspritzventil (22) und eine Aufnahmevorrichtung (50), welche ein Kühlkörperelement (46) umfasst, wobei das Einspritzventil (22) und die Aufnahmevorrichtung (50) mittels mindestens einer stoffschlüssigen Verbindung (62, 64) zu einer baulichen Einheit zusammengefasst sind, wobei das Einspritzventil (22) an einem unteren Ende im Bereich einer Spritzlochscheibe (54) mit dem Kühlkörperelement (46) mittels einer Schweißnaht (62) stoffschlüssig und dichtend verbunden ist, dass das Kühlkörperelement (46) eine mehrteilige Konstruktion aus dünnwandigen Bauteilen (16, 17) ist, welche derart miteinander stoffschlüssig verbunden sind, dass eine Ringkammer (20) gebildet wird, welche mit einem Kühlmediumzulauf (34) und einem Kühlmediumablauf (36) verbindbar ist, um die Ringkammer (20) mit Kühlmedium zu beaufschlagen, wobei dem Kühlmedium ein durch Trennelemente (58) definierter Strömungsweg aufgeprägt wird, und dass zur Kompensation unterschiedlicher thermischer Längendehnungen von Einspritzventil (22) und Aufnahmevorrichtung (50) ein Dehnungskompensationsmittel (70) vorgesehen ist, **dadurch gekennzeichnet, daß** die Aufnahmevorrichtung (50) ein Deckelelement (48) umfasst, welches mittels einer Schweißnaht (49) mit dem Kühlkörperelement (46) verbunden ist und das Einspritzventil (22) an einem oberen Ende mit dem Deckelelement (48) der Aufnahmevorrichtung (50) mittels einer Schweißnaht (64) stoffschlüssig und dichtend verbunden ist, wobei das Dehnungskompensationsmittel in Form eines Federelements oder eines Wellenbalgs ausgebildet ist.

2. Dosiervorrichtung (10) nach Anspruch 1, **dadurch gekennzeichnet, dass** zwischen Kühlkörperelement (46) und dem in der Aufnahmevorrichtung (50) aufgenommenen Einspritzventil (22) ein Hülsenraum (68) gebildet ist, welcher das Einspritzventil (22) weitgehend vollständig umschließt.

3. Dosiervorrichtung (10) nach Anspruch 2, **dadurch gekennzeichnet, dass** der Hülsenraum (68) mit einem Medium gefüllt ist, welches einen Wärmeübertragung begünstigt.

4. Dosiervorrichtung (10) nach einem der Ansprüche 1 bis 3, **dadurch gekennzeichnet, dass** das Einspritzventil (22) in der Aufnahmevorrichtung (50) von einem Halteelement (66) in radialer Richtung positioniert ist.

5. Dosiervorrichtung (10) nach Anspruch 4, **dadurch gekennzeichnet, dass** das Halteelement (66) in Form eines ringförmigen Wärmeleitkörpers gestaltet ist, welcher im Bereich des Hülsenraums (68) aufgenommen ist.

6. Dosiervorrichtung (10) nach einem der Ansprüche 1 bis 5, **dadurch gekennzeichnet, dass** an dem Deckelelement (48) eine abdichtbare Durchführung (72) für eine elektrische Ansteuerung des Einspritzventils (22) vorgesehen ist.

## Claims

1. Dosing device (10) for the introduction of an operating or auxiliary substance into a flow pipe of an internal combustion engine, in particular for introducing a reducing agent into an exhaust pipe (12), comprising an injection valve (22) and a receiving device (50) which comprises a cooling body element (46), wherein the injection valve (22) and the receiving device (50) are combined to form a structural unit by way of at least one cohesive connection (62, 64), wherein the injection valve (22) is, at a lower end in the region of a spray hole disk (54), connected cohesively and sealingly to the cooling body element (46) by way of a weld seam (62), that the cooling body element (46) is a multi-part construction composed of thin-walled components (16, 17) which are cohesively connected to one another in such a way that a ring-shaped chamber (20) is formed which is connectable to a cooling medium inlet (34) and to a cooling medium outlet (36) in order for the ring-shaped chamber (20) to be charged with cooling medium, wherein a flow path defined by dividing elements (58) is imparted to the cooling medium, and that, for the compensation of different thermal length expansions of injection valve (22) and receiving device (50), an expansion compensation means (70) is provided, **characterized in that** the receiving device (50) comprises a cover element (48) which is connected by way of a weld seam (49) to the cooling body element (46) and the injection valve (22) is, at an upper end, connected cohesively and sealingly to the cover element (48) of the receiving device (50) by way of a weld seam (64), wherein the expansion compensation means is configured in the form of a spring element or a corrugated bellows.

2. Dosing device (10) according to one Claim 1, **characterized in that**, between the cooling body element (46) and the injection valve (22) received in the receiving device (50), there is formed a sleeve chamber (68) which substantially completely surrounds the injection valve (22).

3. Dosing device (10) according to Claim 2 **characterized in that** the sleeve chamber (68) is filled with a medium which promotes a heat transfer.

4. Dosing device (10) according to one of Claims 1 to 3, **characterized in that** the injection valve (22) is positioned in the receiving device (50) in a radial direction by a holding element (66).

5. Dosing device (10) according to Claim 4, **characterized in that** the holding element (66) is designed in the form of a ring-shaped thermally conductive body which is accommodated in the region of the sleeve chamber (68).

6. Dosing device (10) according to one of Claims 1 to 5, **characterized in that**, on the cover element (48), there is provided a leadthrough (72), which can be sealed off, for an electric actuation means of the injection valve (22).

## Revendications

1. Dispositif de dosage (10) pour introduire un carburant ou un adjuvant dans un tube d'écoulement d'un moteur à combustion interne, en particulier pour introduire un agent réducteur dans un tuyau d'échappement (12), comprenant une soupape d'injection (22) et un dispositif de réception (50), qui comprend un élément de corps de refroidissement (46), dans lequel la soupape d'injection (22) et le dispositif de réception (50) sont assemblés en une unité de construction au moyen d'au moins une liaison matérielle (62, 64), dans lequel la soupape d'injection (22) est assemblée par une extrémité inférieure dans la région d'un disque perforé d'injection (54) à l'élément de corps de refroidissement (46) par une liaison matérielle et étanche au moyen d'un cordon de soudure (62), que l'élément de corps de refroidissement (46) est une construction en plusieurs parties de composants à paroi mince (16, 17), qui sont assemblés matériellement les uns aux autres, de manière à former une chambre annulaire (20), qui peut être raccordée à une arrivée de milieu de refroidissement (34) et à une évacuation de milieu de refroidissement (36), afin d'alimenter la chambre annulaire (20) en milieu de refroidissement, dans lequel on impose au milieu de refroidissement un chemin d'écoulement défini par des éléments de séparation (58), et qu'il est prévu un moyen de compensation de dilatation (70) pour compenser des différences de dilatation longitudinale thermique de la soupape d'injection (22) et du dispositif de réception (50), **caractérisé en ce que** le dispositif de réception (50) comprend un élément de couvercle (48), qui est assemblé à l'élément de corps de refroidissement (46) au moyen d'un cordon de soudure (49) et la soupape d'injection (22) est assemblée par une extrémité supérieure à l'élément de couvercle (48) du dispositif de réception (50) par une liaison matérielle et étanche au moyen d'un cordon de soudure (64), dans lequel le moyen de compensation de dilatation est réalisé sous la forme d'un élément de ressort ou d'un soufflet ondulé.

2. Dispositif de dosage (10) selon la revendication 1, **caractérisé en ce qu'**une chambre de gaine (68), qui entoure largement entièrement la soupape d'injection (22), est formée entre l'élément de corps de refroidissement (46) et la soupape d'injection (22) logée dans le dispositif de réception (50).

3. Dispositif de dosage (10) selon la revendication 2, **caractérisé en ce que** la chambre de gaine (68) est remplie d'un milieu, qui favorise un transfert de chaleur.

4. Dispositif de dosage (10) selon l'une quelconque des revendications 1 à 3, **caractérisé en ce que** la soupape d'injection (22) est positionnée en direction radiale dans le dispositif de réception (50) au moyen d'un élément de maintien (66).

5. Dispositif de dosage (10) selon la revendication 4, **caractérisé en ce que** l'élément de maintien (66) est réalisé sous la forme d'un corps conducteur de chaleur annulaire, qui est placé dans la région de la chambre de gaine (68).

6. Dispositif de dosage (10) selon l'une quelconque des revendications 1 à 5, **caractérisé en ce qu'**il est prévu sur l'élément de couvercle (48) une traversée étanche (72) pour une commande électrique de la soupape d'injection (22).
